# EUROPEAN PATENT SPECIFICATION

(11) **EP 3 389 240 B1**
(45) Date of publication and mention of the grant of the patent: **24.06.2020**
(21) Application number: 16872284.1
(22) Date of filing: 16.11.2016
(51) Int. Cl.: H04L 29/08

(54) **METHOD AND SYSTEM FOR PROCESSING CACHE CLUSTER SERVICE**
VERFAHREN UND SYSTEM ZUR VERARBEITUNG EINES CACHE-CLUSTER-DIENSTES
PROCÉDÉ ET SYSTÈME DE TRAITEMENT D'UN SERVICE DE GRAPPE DE CACHE

(30) Priority: 08.12.2015 CN 201510898224
(43) Date of publication of application: 17.10.2018
(73) Proprietor: ZTE Corporation, Shenzhen, Guangdong 518057 (CN)
(72) Inventor: WANG, Weiqiang, Shenzhen Guangdong 518057 (CN); CHEN, Yingchuan, Shenzhen Guangdong 518057 (CN)
(74) Representative: Baudler, Ron
(86) International application number: PCT/CN2016/106006
(87) International publication number: WO 2017/097092

(56) References cited:
- EP-A1- 2 501 104
- CN-A- 102 685 177
- CN-A- 104 580 393
- US-A1- 2013 007 239
- US-B1- 7 774 470
- PARAMESHWARAN B ET AL: "Web Cache Communication Protocol V2, Revision 1; draft-param-wccp-v2rev1-00.txt", WEB CACHE COMMUNICATION PROTOCOL V2, REVISION 1; DRAFT-PARAM-WCCP-V2REV1-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 16 June 2015 (2015-06-16), pages 1-87, XP015106722, [retrieved on 2015-06-16]

## Description

### TECHNICAL FIELD

The present invention relates to the field of communications, and in particular, to a method and a system for processing cache cluster service.

### BACKGROUND

With the rapid development of the Internet (Internet), network applications are constantly enriched, and various network services continue to consume Internet bandwidth. At the same time, Internet users are also growing rapidly, causing the following problems. On the one hand, the rapid increase of users makes the server overloaded and cannot respond to user requests in time. On the other hand, serious network congestion may be caused due to insufficiency of network bandwidth and delay of data transmission link.

To this end, the web page caching technology is proposed to cache objects that the user has visited. Access to the same object is directly provided by a cache server, which eliminates the need for processing ability and egress bandwidth of the source server, reduces network traffic, and saves bandwidth resources as well as cost. At the same time, since the user's request to the server can be immediately responded by the cache server, the response speed of the user access can be greatly improved.

In related art, the caching technology is mainly divided into two categories: hijacking mode and transparent mode. In the hijacking mode, the user request is transferred to the cache server by hijacking and then redirecting through Domain Name Server (DNS) and Hypertext Transfer Protocol (HTTP). However, this method does not comply with some regulations, which is easy to lead to legal disputes. Also, the content update and maintenance are complicated and the maintenance pressure is high. In the transparent mode, as its name suggests, it is transparent to users as well as content providers. The user does not know that the content is provided by the cache, and the content provider can receive all the user requests. Moreover, any addition, deletion, modification, and cease of the content source can be embodied in the service in real time.

A fully transparent cache cluster service system is mainly implemented by means of the Web Cache Communication Protocol (WCCP). The WCCP defines a mechanism for transparent redirection between the router and the cache server, but it is generally implemented on a dedicated device, requiring a dedicated router, and the cache server also needs to support these protocols, resulting in a high cost of full transparent cache technology deployment. Furthermore, in this case, the load balancing function in the cache server cluster mode needs to be implemented on the router, resulting in low flexibility, and only a simple hash (HASH) policy or a simple masking strategy can be adopted. Existing well-known load balancing software solutions, such as Linux Virtual Server (LVS), NGINX and HAPROXY, are not applicable to the fully transparent cache cluster service scenario.

In view of the related art, there is currently no effective solution for low efficiency of the cache cluster service.

This section provides background information related to the present invention which is not necessarily prior art.

Patent documents US 2013/0007239 discloses a method of providing by an intermediary device access to a service deployed in parallel to the intermediary device, the method comprising:(a) receiving, by an intermediary device deployed between a plurality of clients and one or more servers, a request from a client to access a server via a first transport layer connection;(b) determining, by the intermediary device responsive to a policy, that the request is to be processed by a service provided by a second device, the second device deployed in parallel to the intermediary device;(c) forwarding, by the intermediary device, the request via a second transport layer connection to the second device for processing by the service, the request modified by the intermediary device to change a Media Access Control (MAC) address of a destination of the request to a MAC address of the second device;(d) receiving, by the intermediary device, a response to processing the request from the service of the second device;(e) identifying, by the intermediary device, that the response is from the second device via one or more properties of a transport layer connection carrying the response; and(f) continue processing, by the intermediary device, the request responsive to receiving the response from the second device.

Patent document US 7,774,470 discloses a method for load balancing requests for information from clients and providing the information in response, the method comprising: receiving a request for information from a client; incrementally calculating an identifier of an active server of a plurality of servers responsive to different subsets of a same hash result generated responsive to the request; routing the request to the server identified by the identifier; determining the information requested by the request; and providing the information determined in response to the request to the client.

However, the above-mentioned issues are not solved.

### SUMMARY

The present invention provides a method and a system for processing cache cluster service as defined in the annexed claims, so as to at least solve the problem of inefficient cache cluster service in the related art.

According to an aspect of the present invention, a method for processing cache cluster service is provided, including:
receiving, by a load balancing server, a first data packet forwarded by a router from a sender, wherein a source address of the first data packet is a user IP address of the sender, and a destination address of the first data packet is a source station IP address of a receiver;
transmitting, by the load balancing server, a second data packet corresponding to the first data packet to a cache server, wherein the second data packet carries the user IP address and the source station IP address, a source address of the second data packet is an IP address of the load balancing service, and a destination address of the second data packet is an IP address of the cache server;
receiving, by the load balancing server, a third data packet corresponding to the second data packet and transmitted by the cache server, wherein the third data packet carries the user IP address and the source station IP address, a source address of the third data packet is the IP address of the cache server, and a destination address of the third data packet is the IP address of the load balancing server; and
transmitting, by the load balancing server, a fourth data packet corresponding to the third data packet to the router, wherein a source address of the fourth data packet is the user IP address of the sender, and a destination address of the fourth data packet is the source station IP address of the receiver.

The second data packet carries the user IP address and the source station IP address includes:
carrying the user IP address and the source station IP address in a Hypertext Transfer Protocol HTTP header field of the second data packet.

The receiving, by the load balancing server, a third data packet corresponding to the second data packet and transmitted by the cache server includes:
receiving, by the load balancing server, a verification request message initiated by the cache server, wherein the verification request message is used for performing a verification with the receiver on whether locally saved content of the cache server requested by a user request message is valid;
receiving by the load balancing server, when the verification indicates a valid result, a valid response from the receiver, and transmitting the valid response to the cache server, the valid response triggering the cache server to transmit the locally saved content to the sender;
receiving by the load balancing server, when the verification indicates an invalid result, an invalid response from the receiver and new content requested by the user request message, and transmitting the invalid response and the new content to the cache server, wherein the new content triggering the cache server to save
the new content and transmit the new content to the sender.

The receiving, by a load balancing server, a first data packet forwarded by a router from a sender includes:
receiving, by the load balancing server, a plurality of user request messages from the sender, extracting keywords from the plurality of user request messages, and
associating the keywords with responses of the plurality of user request messages, wherein user request messages with same response in the plurality of user request messages correspond to same content in the cache server; and
the transmitting, by the load balancing server, a second data packet corresponding to the first data packet to a cache server includes:
   transmitting, by the load balancing server, the user request messages to the cache server.

The extracting keywords from the plurality of user request messages includes:
extracting a feature string of Uniform Resource Locator URL in the user request messages as the keywords.

The transmitting the user request messages to the cache server includes:
selecting the cache server based on a consistent hash algorithm, and transmitting the user request messages to the cache server.

According to another aspect of the present invention, a system for processing cache cluster service is provided, including: a sender, a receiver, a router, a load balancing server and a cache server; the load balancing server is configured to:
receive a first data packet forwarded by the router from the sender, wherein a source address of the first data packet is a user IP address of the sender, and a destination address of the first data packet is a source station IP address of the receiver;
transmit a second data packet corresponding to the first data packet to the cache server, wherein the second data packet carries the user IP address and the source station IP address, a source address of the second data packet is an IP address of the load balancing service, and a destination address of the second data packet is an IP address of the cache server;
receive a third data packet corresponding to the second data packet and transmitted by the cache server, wherein the third data packet carries the user IP address and the source station IP address, a source address of the third data packet is the IP address of the cache server, and a destination address of the third data packet is the IP address of the load balancing server; and
transmit a fourth data packet corresponding to the third data packet to the router, wherein a source address of the fourth data packet is the user IP address of the sender, and a destination address of the fourth data packet is the source station IP address of the receiver.

The second data packet carries the user IP address and the source station IP address includes:
carrying the user IP address and the source station IP address in a Hypertext Transfer Protocol HTTP header field of the second data packet.

The load balancing server is further configured to receive a verification request message initiated by the cache server, wherein the verification request message is used for performing a verification with the receiver on whether locally saved content of the cache server requested by a user request message is valid;
when the verification indicates a valid result, the load balancing server is configured to receive a valid response from the receiver, and transmit the valid response to the cache server, the valid response triggering the cache server to transmit the locally saved content to the sender; and
when the verification indicates an invalid result, the load balancing server is configured to receive an invalid response from the receiver and new content requested by the user request message, and transmit the invalid response and the new content to the cache server, wherein the new content triggering the cache server to save the new content and transmit the new content to the sender.

The load balancing server is further configured to receive a plurality of user request messages from the sender, extract keywords from the plurality of user request messages, and associate the keywords with responses of the plurality of user request messages, wherein user request messages with same response in the plurality of user request messages correspond to same content in the cache server; and
the load balancing server is further configured to transmit the user request messages to the cache server.

An embodiment of the present disclosure also provides a computer readable storage medium storing a computer program. The computer program includes program instructions, and when the program instructions are executed by a load balancing server, the load balancing server is caused to perform the above method for processing cache cluster service.

According to the present invention, the load balancing server receives a first data packet forwarded by a router from a sender, wherein a source address of the first data packet is a user IP address of the sender, and a destination address of the first data packet is a source station IP address of a receiver; transmits a second data packet corresponding to the first data packet to a cache server, wherein the second data packet carries the user IP address and the source station IP address, a source address of the second data packet is an IP address of the load balancing service, and a destination address of the second data packet is an IP address of the cache server; receives a third data packet corresponding to the second data packet and transmitted by the cache server, wherein the third data packet carries the user IP address and the source station IP address, a source address of the third data packet is the IP address of the cache server, and a destination address of the third data packet is the IP address of the load balancing server; and transmits a fourth data packet corresponding to the third data packet to the router, wherein a source address of the fourth data packet is the user IP address of the sender, and a destination address of the fourth data packet is the source station IP address of the receiver. Thus, the problem related to low efficiency of the cache cluster service can be solved, and the efficiency of cache cluster service can be improved.

This section provides a summary of various implementations or examples of the technology described in the invention, and is not a comprehensive invention of the full scope or all features of the disclosed technology.

### BRIEF DESCRIPTION OF THE DRAWINGS

The drawings are intended to provide a further understanding of the present invention and constitute a part of the present invention. The exemplary embodiments and description thereof are intended to explain the invention, rather than limiting the invention improperly. In the drawings:
Fig. 1 is a flowchart illustrating a method for processing cache cluster service in accordance with an embodiment of the present invention;
Fig. 2 is a structural block diagram illustrating a system for processing cache cluster service in accordance with an embodiment of the present invention;
Fig. 3 is a schematic diagram illustrating a communication method in accordance with a preferred embodiment of the present invention;
Fig. 4 is a schematic diagram illustrating a load balancing method in accordance with a preferred embodiment of the present invention;
Fig. 5 is a schematic diagram illustrating a verification method in accordance with a preferred embodiment of the present invention;
Fig. 6 is a schematic diagram illustrating composition of a system in accordance with a preferred embodiment of the present invention;
Fig. 7 is a flowchart of a system in accordance with a preferred embodiment of the present invention.

### DETAILED DESCRIPTION

The invention will be described in detail below with reference to the drawings in conjunction with the embodiments. It should be noted that the embodiments in the present application and the features in the embodiments may be combined with each other without conflict.

It should be noted that the terms "first", "second", and the like in the specification and claims of the present invention are used to distinguish similar objects, and are not necessarily used to describe a particular order or order.

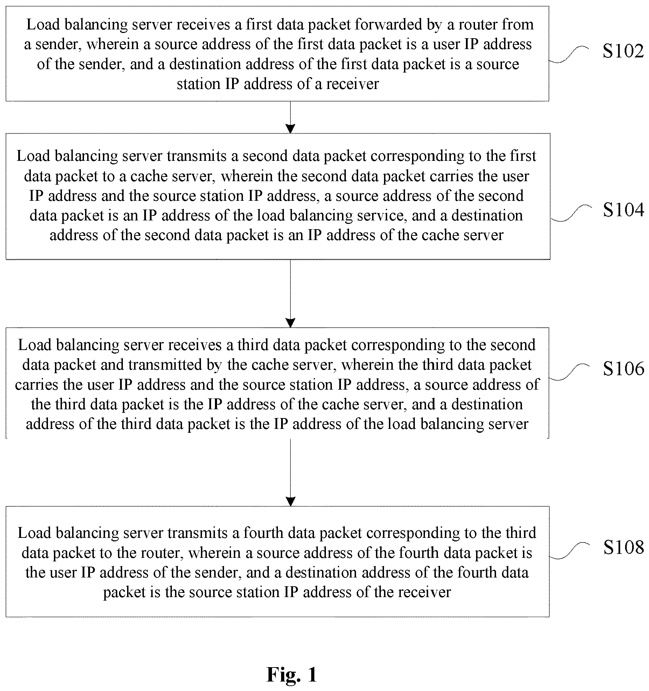

In this embodiment, a method for processing cache cluster service is provided. Fig. 1 is a flowchart illustrating a method for processing cache cluster service according to an embodiment of the present invention. As shown in Fig. 1, the process includes the following steps.

In step S102, a load balancing server receives a first data packet forwarded by a router from a sender, wherein a source address of the first data packet is a user IP address of the sender, and a destination address of the first data packet is a source station IP address of a receiver.

In step S104, the load balancing server transmits a second data packet corresponding to the first data packet to a cache server, wherein the second data packet carries the user IP address and the source station IP address, a source address of the second data packet is an IP address of the load balancing service, and a destination address of the second data packet is an IP address of the cache server.

In step S106, the load balancing server receives a third data packet corresponding to the second data packet and transmitted by the cache server, wherein the third data packet carries the user IP address and the source station IP address, a source address of the third data packet is the IP address of the cache server, and a destination address of the third data packet is the IP address of the load balancing server.

In step S108, the load balancing server transmits a fourth data packet corresponding to the third data packet to the router, wherein a source address of the fourth data packet is the user IP address of the sender, and a destination address of the fourth data packet is the source station IP address of the receiver.

Through the above steps, an opaque manner of communication is implemented between the load balancing server and the cache server using internal IP address, while a fully transparent manner of communication is implemented between the router and the load balancing server using the user IP address and the source station IP address. In this way, the problem related to low efficiency of the cache cluster service can be solved, and the efficiency of cache cluster service can be improved.

In an embodiment, the user IP address and the source station IP address are carried in a Hypertext Transfer Protocol HTTP header field of the second data packet.

In an embodiment, the load balancing server is further configured to receive a verification request message initiated by the cache server, wherein the verification request message is used for performing a verification with the receiver on whether locally saved content of the cache server requested by a user request message is valid. When the verification indicates a valid result, the load balancing server is configured to receive a valid response from the receiver, and transmit the valid response to the cache server, the valid response triggering the cache server to transmit the locally saved content to the sender.

When the verification indicates an invalid result, the load balancing server is configured to receive an invalid response from the receiver and new content requested by the user request message, and transmit the invalid response and the new content to the cache server, wherein the new content triggering the cache server to save the new content and transmit the new content to the sender.

In this embodiment, the load balancing server is further configured to receive a plurality of user request messages from the sender, extract keywords from the plurality of user request messages, and associate the keywords with responses of the plurality of user request messages, wherein user request messages with same response in the plurality of user request messages correspond to same content in the cache server; and

The load balancing server transmits the second data packet corresponding to the first data packet to the cache server by transmitting the user request messages to the cache server.

The keywords are extracted from the multiple user request messages by extracting a feature string of Uniform Resource Locator URL in the user request messages as the keywords.

The user request messages are transmitted to the cache server by selecting the cache server based on a consistent hash algorithm, and transmitting the user request messages to the cache server.

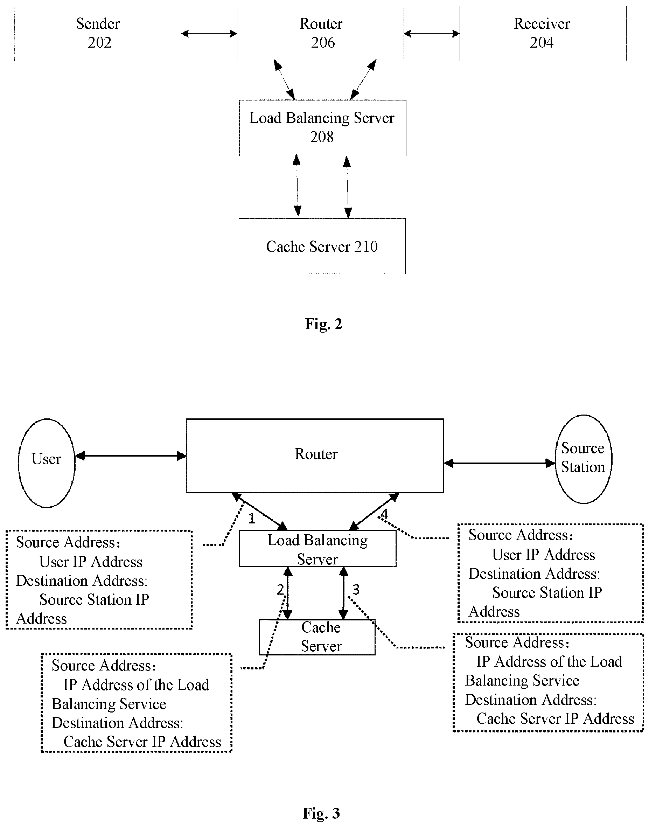

In another embodiment of the present invention, a system for processing cache cluster service is also provided. Fig. 2 is a structural block diagram illustrating a system for processing cache cluster service according to an embodiment of the present invention. As shown in Fig. 2, the system includes a sender 202, a receiver 204, a router 206, a load balancing server 208 and a cache server 210.

The load balancing server 208 is configured to receive a first data packet forwarded by the router 206 from the sender 202, wherein a source address of the first data packet is a user IP address of the sender 202, and a destination address of the first data packet is a source station IP address of the receiver 204.

The load balancing server 208 is configured to transmit a second data packet corresponding to the first data packet to the cache server 210, wherein the second data packet carries the user IP address and the source station IP address, a source address of the second data packet is an IP address of the load balancing service, and a destination address of the second data packet is an IP address of the cache server 210.

The load balancing server 208 is configured to receive a third data packet corresponding to the second data packet and transmitted by the cache server, wherein the third data packet carries the user IP address and the source station IP address, a source address of the third data packet is the IP address of the cache server 210, and a destination address of the third data packet is the IP address of the load balancing server; and

The load balancing server 208 is configured to transmit a fourth data packet corresponding to the third data packet to the router 206, wherein a source address of the fourth data packet is the user IP address of the sender 202, and a destination address of the fourth data packet is the source station IP address of the receiver 204.

Through the above steps, an opaque manner of communication is implemented between the load balancing server 208 and the cache server 210 using internal IP address, while a fully transparent manner of communication is implemented between the router 206 and the load balancing server 208 using the user IP address and the source station IP address. In this way, the problem related to low efficiency of the cache cluster service can be solved, and the efficiency of cache cluster service can be improved.

In this embodiment, the second data packet carries the user IP address and the source station IP address by carrying the user IP address and the source station IP address in a Hypertext Transfer Protocol HTTP header field of the second data packet.

In an embodiment, the load balancing server 208 receives a verification request message initiated by the cache server 210, wherein the verification request message is used for performing a verification with the receiver 204 on whether locally saved content of the cache server requested by a user request message is valid.

When the verification indicates a valid result, the load balancing server 208 is configured to receive a valid response from the receiver 204, and transmit the valid response to the cache server 210, the valid response triggering the cache server to transmit the locally saved content to the sender 202.

When the verification indicates an invalid result, the load balancing server 208 is configured to receive an invalid response from the receiver 204 and new content requested by the user request message, and transmit the invalid response and the new content to the cache server 210, wherein the new content triggering the cache server to save the new content and transmit the new content to the sender 202.

In an embodiment, the load balancing server 208 receives a plurality of user request messages from the sender 202, extracts keywords from the plurality of user request messages, and associates the keywords with responses of the plurality of user request messages, respectively, wherein user request messages with same response in the plurality of user request messages correspond to same content in the cache server 210. The load balancing server 208 is further configured to transmit the user request messages to the cache server 210.

The invention will now be described in detail in conjunction with the preferred embodiments and embodiments.

A preferred embodiment of the present invention provides a method and a system for implementing fully transparent cache cluster service. Communication can be achieved between simulated source station and user, as well as between simulated user and source station, by implementing the communication method, load balancing method, and verification method according to embodiments of the present invention, on a router, a load balancing server, and a cache server which are commonly used. Thus, transparent transmission can be achieved between the user and the source station while providing the user with efficient cache service.

A preferred embodiment of the present invention provides a fully transparent communication method. Through this method, an opaque manner of communication is implemented between the load balancing server and the cache server using internal IP address, while a fully transparent manner of communication is implemented between the router and the load balancing server using the user IP address and the source station IP address.

A preferred embodiment of the present invention further provides a load balancing method for improving a cache hit ratio. Through this method, user requests can be uniformly allocated to respective cache servers, while those user requests directed to same content can be scheduled to the same cache server. In this way, the load of each cache server can be balanced and the cache hit rate can be increased.

A preferred embodiment of the present invention further provides a verification method for forwarding all user requests to a source station. Through this method, the user request is forwarded to the source station for verification regardless of whether the content requested by the user is on the cache server, enabling the source station to acknowledge the user's access behavior. In traditional way, however, when there is content on the cache server, the verification will not be forwarded to the source station, thus the source station cannot acknowledge the user's request situation if the request cache is hit.

A preferred embodiment of the present invention further provides a fully transparent cache cluster service system, including a router, a load balancing server and a cache server, which are generally used, as well as implementing the communication method, the load balancing method, and the verification method as described above.

Based on the above technical solution according to the preferred embodiments of the present invention, since only general-purpose router and server are needed, fully transparent cache cluster service can be implemented without providing any dedicated-purpose routing device or cache device. In this way, the deployment cost of the fully transparent caching technology can be greatly reduced, facilitating promotion of the fully transparent caching technology.

As to the communication method for implementing full transparency according to preferred embodiments, Fig. 3 is a schematic diagram illustrating a communication method according to a preferred embodiment of the present invention. As shown in Fig. 3, a fully transparent manner of communication is implemented between the router and the load balancing server using the user IP address and the source station IP address (1, 4 in Fig. 3), and an opaque manner of communication is implemented between the load balancing server and the cache server using internal IP address (2, 3 in Fig. 3).

When the router forwards the user service request to the load balancer, a destination MAC address in the data packet is converted into a MAC address of the load balancing server through a policy routing mode supported by the general-purpose router. In this way, when the router forwards the packet to the load balancer, it still uses the user IP address and the source station IP address for communication.

When the load balancing server receives the user service request forwarded by the router (1 in Fig. 3), the source and destination IP address information is extracted therefrom. At the same time, the following two fields are added in the HTTP header field, and the request is forwarded to the cache server via a communication mode using internal IP address (2 in Fig. 3).
X-REQUEST-FROM: user IP address;
X-REQUEST-TO: source station IP address;

By placing the user IP address and the source station IP address in the HTTP header field, when the load balancer returns the request content to the source station, the user IP address can be restored to initiate the request to the source station IP address. In this way, communication can be implemented between the load balancer and the cache server using the internal IP address respectively configured, without using the user IP address and the source station IP address.

When the cache server receives a user request forwarded by the load balancing server (2 in Fig. 3), communication is implemented between the cache server and the load balancing server using the internal IP address. Specifically, the user IP address and the source station IP address are carried in the HTTP header field, while the IP addresses configured respectively by the cache server and the load balancer are used for communication. When the cache server is expected to initiate a request to the source station, the request is not directly transmitted to the source station, instead, the user's original request is forwarded to the load balancing server along with the two fields in the HTTP header using the internal IP address for communication (3 in Fig. 3). Thus, communication is stilled implemented between the cache server and the load balancing server using the internal IP addresses as respectively configured.

When the load balancing server receives the request forwarded by the cache server (3 in Fig. 3), X-REQUEST-FROM and X-REQUEST-TO fields are extracted from the HTTP header to obtain the user IP address and the source station IP address of the original user request. Then, communication is implemented by using the user IP address as the source address and the source station IP address as the destination address, so as to forward the request to the source station for processing through the router (4 in Figure 3). In this way, when the source station receives the request initiated by the load balancer, since the source IP address in the request message is the user IP address, the request is considered to be directly from the user, enabling a fully transparent communication between the source station and the user.

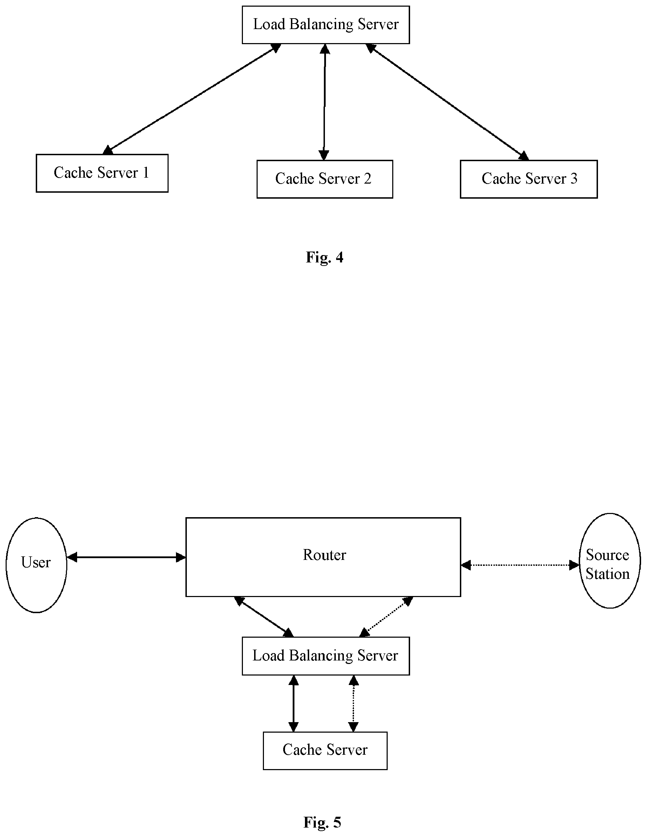

As to a load balancing method for improving the cache hit ratio according to the preferred embodiment, Fig. 4 is a schematic diagram illustrating a load balancing method according to a preferred embodiment of the present invention. As shown in Fig. 4, user requests can be uniformly allocated to respective cache servers, while those user requests directed to same content can be scheduled to the same cache server.

In an embodiment, when the load balancer receives the user request, based on Uniform Resource Locator (URL) information in the request, a feature string (such as a file name) in the URL may be extracted as a keyword. Then, a consistency hash algorithm (such as CARP algorithm) may be adopted to select a cache server for distribution of the user request.

When the cache server receives the user request, based on the URL information of the request, a string in the URL that can uniquely indicate the content is extracted as a keyword string, and a correspondence is established between response content of the request and the keyword. In the simplest case, the entire URL can be deemed as a keyword, so that only the same URL corresponds to the same content on the cache server. When the same content is indicated by different request URLs, the same part of the different URLs can be extracted as the keyword, because the keyword and the response content are associated, so although the request URL is different, when the keywords extracted from the request URL are the same, the cache server may also consider that the user is requesting the same content. In this way, the correspondence between the same content and different URLs can be realized, and the hit rate of the request can be improved.

In a preferred embodiment of a verification method where all user requests are forwarded to the source station, Fig. 5 illustrates a schematic diagram of a verification method according to the preferred embodiment of the present invention. As shown in Fig. 5, the dotted line is indicative of a verification flow, where the user request is forwarded to the source station for verification in regardless of whether there is any content requested by the user on the cache server, so that the source station can acknowledge the access behavior of the user.

Specifically, when the cache server receives the user request, if there is content locally, an expiration time, a content label, and the like information of the content are extracted, and a verification request is initiated to the source station. If the content has not expired or the content tag has not changed, the source station will return a response of "the content has not been modified", indicating that the locally cached content can continue to be used, then the cache server can respond to the user with the local content. If the source station returns a response of "new content", indicating that the locally cached content has expired, then it is processed in such a way that there is no content locally. If there is no content locally, the cache server will initiate a source request to the source station, reply the response from the source station to the user, and cache the responded content.

The method described in the embodiment of the present invention will be described below in company with structural diagram and working flowchart of the system.

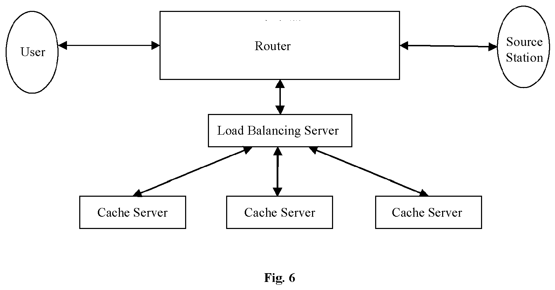

Fig. 6 is a schematic diagram illustrating composition of a system according to a preferred embodiment of the present invention. Three types of devices shown in Fig. 6 include a general-purpose router, a load balancing server, and a group of cache servers.

The general-purpose router is configured to support the policy routing function. The policy routing can be configured in such a way that user requests are introduced to the load balancing server. Moreover, the policy routing can be configured in such a way that responses from the source station are introduced to the load balancing server.

The load balancing server is configured to receive HTTP request, extract source and destination IP addresses therein, and place them in header fields X-REQUEST-FROM and X-REQUEST-TO of the HTTP request. The load balancing server is also configured to extract these two fields from the HTTP header and use them as the source and destination IP addresses for communication with the source station.

The cache server is configured to implement the cache function. When receiving the user request, if there is content locally, the cache server replay response to the user with local content after being verified by the source station. If there is no content locally, the cache server initiates a source request, and responds the response from the source station w to the user, and cache the response at the same time.

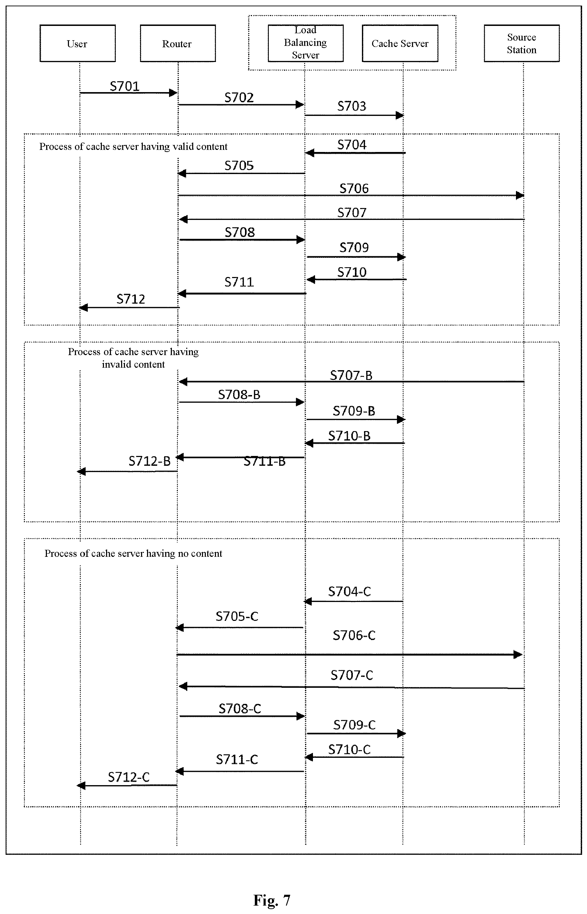

Fig.7 is a system flowchart according to a preferred embodiment of the present invention. As shown in Fig. 7, the system includes a general-purpose router, a load balancing server, and a cache server, and implements the communication method, the load balancing method, and the verification method described above. As shown in Fig. 7, the following steps are included.

In step S701, the user initiates a request to the source station.

In step S702, the router guides the traffic that needs to be cached to the load balancing device through policy routing.

In step S703, the load balancing server receives the user request, and distributes the request to a cache server according to the communication method and load balancing method described above.

In step S704, when finding a locally hit cache, the cache server initiates verification with the source station according to the above verification method.

In step S704, when finding the locally hit cache, the cache server initiates verification with the source station through the load balancing server according to the foregoing method. Otherwise, the flow jumps to step S704-C.

In step S705, the load balancing server forwards the verification request from the cache server to the router.

In step S706, the router forwards the verification request from the cache server to the source station.

In step S707, when determining the content is valid, the source station replies an HTTP 304 NOT MODIFIED response message is returned to the router. Otherwise, the flow jumps to step S707-B.

In step S708, the router forwards the HTTP 304 NOT MODIFIED response message to the load balancing server.

In step S709, the load balancing server forwards the HTTP 304 NOT MODIFIED response message to the cache server.

In step S710, the cache server responds to the user request with the local content by transmitting it to the load balancing server.

In step S711, the load balancing server forwards the local content from the cache server to the router.

In step S712, the router forwards the local content from the cache server to the user.

In step S707-B, when determining the content has expired, the source station replies the router with a new content response.

In step S708-B, the router forwards the new content response to the load balancing server.

In step S709-B, the load balancing server forwards the new content response to the cache server.

In step S710-B, the cache server responds to the user request with the new content by transmitting it to the load balancing server, and stores the same locally.

In step S711-B, the load balancing server forwards the new content response from the cache server to the router.

In step S712-B, the router forwards the new content response from the cache server to the user.

In step S704-C, when there is no locally hit cache, the cache server transmits a content request to the source station through the load balancing server.

In step S705-C, the load balancing server forwards the content request from the cache server to the router.

In step S706-C, the router forwards the content request from the cache server to the source station.

In step S707-C, the source station returns the content requested by the cache server to the router.

In step S708-C, the router forwards the response message of requested content to the load balancing server.

In step S709-C, the load balancing server forwards the response message of requested content to the cache server.

In step S710-C: the cache server responds to the user request with the content acquired by the source request, transmits it to the load balancing server, and stores the same locally.

In step S711-C, the load balancing server forwards the source content response from the cache server to the router.

In step S712-C, the router forwards the source content response from the cache server to the user.

In summary, the present invention provides a method and a system for implementing fully transparent cache cluster service. Based on the system, fully transparent cache cluster service can be implemented without providing any dedicated-purpose routing device or cache device. In this way, the deployment cost of the fully transparent caching technology can be greatly reduced, facilitating promotion of the fully transparent caching technology.

Through the description of the above embodiments, those skilled in the art can clearly understand that the method according to the above embodiment can be implemented by means of software plus a necessary general hardware platform, and of course, can also be through hardware only, but in many cases the former is a better implementation. Based on such understanding, the technical solution of the present invention, which is essential or contributes to the prior art, may be embodied in the form of a software product stored in a storage medium (such as ROM/RAM, disk, The optical disc includes a number of instructions for causing a terminal device (which may be a cell phone, a computer, a server, or a network device, etc.) to perform the methods of various embodiments of the present invention.

It should be noted that each of the above modules may be implemented by software or hardware. For the latter, the foregoing may be implemented in such a way, but not limited to, that the foregoing modules are all located in the same processor; or, the modules are distributed in multiple processors.

Embodiments of the present invention also provide a storage medium. Optionally, in the embodiment, the storage medium may be configured to store program code for performing the method steps of the above embodiment.

In an embodiment, the storage medium is further arranged to store program code for performing the method steps of the above-described embodiments.

Optionally, in an embodiment, the foregoing storage medium may include, but is not limited to, a variety of media that can store program code, such as a USB flash drive, a Read-Only Memory (ROM), a Random Access Memory (RAM), a mobile hard disk, a magnetic memory, and a disc.

Optionally, in an embodiment, the processor performs the method steps of the foregoing embodiments according to the stored program code in the storage medium.

Optionally, the specific examples in this embodiment may refer to the examples described in the foregoing embodiments and the optional embodiments, and details are not described herein again.

It will be apparent to those skilled in the art that the various modules or steps of the present invention described above can be implemented by a general-purpose computing device, which can be centralized on a single computing device or distributed across a network of multiple computing devices. Alternatively, they may be implemented by program code executable by the computing device such that they may be stored in the storage device by the computing device and, in some cases, may be different from the order herein. The steps shown or described are performed or fabricated separately into individual integrated circuit modules, or a plurality of modules or steps thereof are fabricated as a single integrated circuit module. Thus, the invention is not limited to any specific combination of hardware and software.

## Claims

1. A method for processing cache cluster service, comprising:
receiving (S102), by a load balancing server, a first data packet forwarded by a router from a sender, wherein a source address of the first data packet is a user IP address of the sender, and a destination address of the first data packet is a source station IP address of a receiver;
transmitting (S104), by the load balancing server, a second data packet corresponding to the first data packet to a cache server, wherein the second data packet carries the user IP address and the source station IP address, a source address of the second data packet is an IP address of the load balancing server, and a destination address of the second data packet is an IP address of the cache server;
receiving (S106), by the load balancing server, a third data packet corresponding to the second data packet and transmitted by the cache server, wherein the third data packet carries the user IP address and the source station IP address, a source address of the third data packet is the IP address of the cache server, and a destination address of the third data packet is the IP address of the load balancing server; and
transmitting (S108), by the load balancing server, a fourth data packet corresponding to the third data packet to the router, wherein a source address of the fourth data packet is the user IP address of the sender, and a destination address of the fourth data packet is the source station IP address of the receiver,
wherein the receiving (S106), by the load balancing server, a third data packet corresponding to the second data packet and transmitted by the cache server is **characterised by**:
receiving, by the load balancing server, a verification request message initiated by the cache server, and forwarding, by the load balancing server, the verification request message to the receiver via the router, wherein the verification request message is used for performing a verification with the receiver on whether locally saved content of the cache server requested by a user request message is valid;
receiving by the load balancing server, when the verification indicates a valid result, a valid response from the receiver, and transmitting the valid response to the cache server, the valid response triggering the cache server to transmit the locally saved content to the sender;
receiving by the load balancing server, when the verification indicates an invalid result, an invalid response from the receiver and new content requested by the user request message, and transmitting the invalid response and the new content to the cache server, wherein the new content triggering the cache server to save the new content and transmit the new content to the sender.

2. The method according to claim 1, wherein the user IP address and the source station IP address are carried in a Hypertext Transfer Protocol HTTP header field of the second data packet.

3. The method according to claim 1, wherein
the receiving (S102), by a load balancing server, a first data packet forwarded by a router from a sender comprises:
receiving, by the load balancing server, a plurality of user request messages from the sender, extracting keywords from the plurality of user request messages, and associating the keywords with responses of the plurality of user request messages, wherein user request messages with same response in the plurality of user request messages correspond to same content in the cache server; and
the transmitting (S104), by the load balancing server, a second data packet corresponding to the first data packet to a cache server comprises:
transmitting, by the load balancing server, the user request messages to the cache server.

4. The method according to claim 3, wherein the extracting keywords from the plurality of user request messages comprises:
extracting a feature string of Uniform Resource Locator URL in the user request messages as the keywords.

5. The method according to claim 1, wherein the transmitting the user request messages to the cache server comprises:
selecting the cache server based on a consistent hash algorithm, and transmitting the user request messages to the cache server.

6. A system for processing cache cluster service, comprising: a sender (202), a receiver (204), a router (206), a load balancing server (208) and a cache server (210); whereby the load balancing server (208) is configured to:
receive a first data packet forwarded by the router (206) from the sender (202), wherein a source address of the first data packet is a user IP address of the sender (202), and a destination address of the first data packet is a source station IP address of the receiver(204);
transmit a second data packet corresponding to the first data packet to the cache server (210), wherein the second data packet carries the user IP address and the source station IP address, a source address of the second data packet is an IP address of the load balancing server (208), and a destination address of the second data packet is an IP address of the cache server (210);
receive a third data packet corresponding to the second data packet and transmitted by the cache server (210), wherein the third data packet carries the user IP address and the source station IP address, a source address of the third data packet is the IP address of the cache server (210), and a destination address of the third data packet is the IP address of the load balancing server (208); and
transmit a fourth data packet corresponding to the third data packet to the router (206), wherein a source address of the fourth data packet is the user IP address of the sender (202), and a destination address of the fourth data packet is the source station IP address of the receiver (204),
wherein the load balancing server (208) is **characterised by** being configured to:
receive a verification request message initiated by the cache server (210), and forward the verification request message to the receiver via the router, wherein the verification request message is used for performing a verification with the receiver (204) on whether locally saved content of the cache server (210) requested by a user request message is valid;
receive, when the verification indicates a valid result, a valid response from the receiver (204), and transmit the valid response to the cache server (210), the valid response triggering the cache server (210) to transmit the locally saved content to the sender (202); and
receive, when the verification indicates an invalid result, an invalid response from the receiver (204) and new content requested by the user request message, and transmit the invalid response and the new content to the cache server (210), wherein the new content triggering the cache server (210) to save the new content and transmit the new content to the sender (202).

7. The system according to claim 6, wherein the user IP address and the source station IP address are carried in a Hypertext Transfer Protocol HTTP header field of the second data packet.

8. The system according to claim 6, wherein the load balancing server (208) is further configured to:
receive a plurality of user request messages from the sender (202), extract keywords from the plurality of user request messages, and associate the keywords with responses of the plurality of user request messages, wherein user request messages with same response in the plurality of user request messages correspond to same content in the cache server (210); and
transmit the user request messages to the cache server (210).

9. A computer readable storage medium, storing a computer program, the computer program comprising program instructions, wherein when the program instructions are executed by a load balancing server, the load balancing server is caused to perform the method according to any one of claims 1-5.

## Patentansprüche

1. Verfahren zur Verarbeitung eines Cache-Clusterservices, umfassend:
Empfangen (S102), durch einen Lastenausgleichsserver, eines ersten Datenpakets, das durch einen Router von einem Sender weitergeleitet wird, wobei eine Quelladresse des ersten Datenpakets eine Benutzer-IP-Adresse des Senders ist, und eine Zieladresse des ersten Datenpakets eine Quellstations-IP-Adresse eines Empfängers ist;
Übertragung (S104), durch den Lastenausgleichsserver, eines zweiten Datenpakets, das dem ersten Datenpaket entspricht, an einen Cache-Server, wobei das zweite Datenpaket die Benutzer-IP-Adresse und die Quellstations-IP-Adresse transportiert, eine Quelladresse des zweiten Datenpakets eine IP-Adresse des Lastenausgleichsservers ist und eine Zieladresse des zweiten Datenpakets eine IP-Adresse des Cache-Servers ist;
Empfangen (S106), durch den Lastenausgleichsserver, eines dritten Datenpakets, das dem zweiten Datenpaket entspricht und durch den Cache-Server übertragen wird, wobei das dritte Datenpaket die Benutzer-IP-Adresse und die Quellstations-IP-Adresse transportiert, eine Quelladresse des dritten Datenpakets die IP-Adresse des Cache-Servers ist und eine Zieladresse des dritten Datenpakets die IP-Adresse des Lastenausgleichsservers ist; und
Übertragung (S108), durch den Lastenausgleichsserver, eines vierten Datenpakets, das dem dritten Datenpaket entspricht, an den Router, wobei eine Quelladresse des vierten Datenpakets die Benutzer-IP-Adresse des Senders ist und eine Zieladresse des vierten Datenpakets die Quellstations-IP-Adresse des Empfängers ist,
wobei das Empfangen (S106), durch den Lastenausgleichsserver, eines dritten Datenpakets, das dem zweiten Datenpaket entspricht und durch den Cache-Server übertragen wird, **gekennzeichnet ist durch**:
Empfangen, **durch** den Lastenausgleichsserver, einer Verifikationsanfragenachricht, die **durch** den Cache-Server initiiert wird, und Weiterleiten, **durch** den Lastenausgleichsserver, der Verifizierungsanfragenachricht über den Router an den Empfänger,
wobei die Verifikationsanfragenachricht verwendet wird, um mit dem Empfänger eine Verifikation durchzuführen, ob der lokal gespeicherte Inhalt des Cache-Servers, der **durch** eine Benutzeranfragenachricht angefragt wird, gültig ist;
Empfangen, **durch** den Lastenausgleichsserver, einer gültigen Antwort von dem Empfänger, wenn die Verifizierung ein gültiges Ergebnis anzeigt, und Übertragen der gültigen Antwort an den Cache-Server, wobei die gültige Antwort den Cache-Server veranlasst, den lokal gespeicherten Inhalt an den Sender zu übertragen;
Empfangen, **durch** den Lastenausgleichsserver, einer ungültigen Antwort von dem Empfänger und eines neuen Inhalts, der von der Benutzeranfragenachricht angefragt wird, wenn die Verifizierung ein ungültiges Ergebnis anzeigt und Übertragen der ungültigen Antwort und des neuen Inhalts an den Cache-Server, wobei der neue Inhalt den Cache-Server veranlasst, den neuen Inhalt zu speichern und den neuen Inhalt an den Sender zu übertragen.

2. Verfahren nach Anspruch 1, bei dem die IP-Adresse des Benutzers und die IP-Adresse der Quellstation in einem HTTP-Header-Feld (Hypertext Transfer Protocol) des zweiten Datenpakets übertragen werden.

3. Verfahren nach Anspruch 1, wobei
das Empfangen (S102), durch einen Lastenausgleichsserver, eines ersten Datenpakets, das von einem Router von einem Sender weitergeleitet wird, umfasst:
Empfangen, durch den Lastenausgleichsserver, einer Vielzahl von Benutzeranfragenachrichten von dem Sender, Extrahieren von Schlüsselwörtern aus der Vielzahl von Benutzeranfragenachrichten und Zuordnen der Schlüsselwörter zu Antworten einer Vielzahl von Benutzeranfragenachrichten, wobei Benutzeranfragenachrichten mit derselben Antwort in der Vielzahl von Benutzeranfragenachrichten demselben Inhalt in dem Cache-Server entsprechen; und
das Übertragen (S104), durch den Lastenausgleichsserver, eines zweiten Datenpakets, das dem ersten Datenpaket entspricht, an einen Cache-Server umfasst:
Übertragen der Benutzeranfragenachrichten an den Cache-Server durch den Lastenausgleichsserver.

4. Verfahren nach Anspruch 3, wobei das Extrahieren von Schlüsselwörtern aus der Vielzahl von Benutzeranfragennachrichten umfasst:
Extrahieren einer charakteristischen Zeichenfolge der URL (Uniform Resource Locator) in den Benutzeranfragenachrichten als die Schlüsselwörter.

5. Verfahren nach Anspruch 1, wobei das Übertragen der Benutzeranfragenachrichten an den Cache-Server umfasst:
Auswählen des Cache-Servers auf der Grundlage eines konsistenten Hash-Algorithmus und Übertragen der Benutzeranfragenachrichten an den Cache-Server.

6. System zur Verarbeitung eines Cache-Cluster-Services, umfassend: einen Sender (202), einen Empfänger (204), einen Router (206), einen Lastenausgleichsserver (208) und einen Cache-Server (210); wobei der Lastenausgleichsserver (208) konfiguriert ist:
ein durch den Router (206) weitergeleitetes erstes Datenpaket von dem Sender (202) zu empfangen, wobei eine Quelladresse des ersten Datenpakets eine Benutzer-IP-Adresse des Senders (202) ist und eine Zieladresse des ersten Datenpakets eine Quellstations-IP-Adresse des Empfängers (204) ist;
Übertragen eines zweiten Datenpakets, das dem ersten Datenpaket entspricht, an den Cache-Server (210), wobei das zweite Datenpaket die Benutzer-IP-Adresse und die Quellstations-IP-Adresse transportiert, eine Quelladresse des zweiten Datenpakets eine IP-Adresse des Lastenausgleichsservers (208) ist und eine Zieladresse des zweiten Datenpakets eine IP-Adresse des Cache-Servers (210) ist;
ein drittes Datenpaket zu empfangen, das dem zweiten Datenpaket entspricht und von dem Cache-Server (210) übertragen wird, wobei das dritte Datenpaket die Benutzer-IP-Adresse und die Quellstations-IP-Adresse transportiert, eine Quelladresse des dritten Datenpakets die IP-Adresse des Cache-Servers (210) ist und eine Zieladresse des dritten Datenpakets die IP-Adresse des Lastenausgleichsservers (208) ist; und
ein viertes Datenpaket, das dem dritten Datenpaket entspricht, an den Router (206) zu übertragen, wobei eine Quelladresse des vierten Datenpakets die Benutzer-IP-Adresse des Senders (202) ist und eine Zieladresse des vierten Datenpakets die Quellstations-IP-Adresse des Empfängers (204) ist,
wobei der Lastenausgleichsserver (208) **dadurch gekennzeichnet ist, dass** er konfiguriert ist:
eine Verifikationsanfragenachricht zu empfangen, die von dem Cache-Server (210) initiiert wird, und die Verifikationsanfragenachricht über den Router an den Empfänger (204) weiterzuleiten, wobei die Verifikationsanfragenachricht dazu verwendet wird, mit dem Empfänger eine Verifikation durchzuführen, ob der lokal gespeicherte Inhalt des Cache-Servers (210), der von einer Benutzeranfragenachricht angefragt wird, gültig ist;
Empfangen, wenn die Verifizierung ein gültiges Ergebnis anzeigt, einer gültigen Antwort von dem Empfänger (204) und Übertragen der gültigen Antwort an den Cache-Server (210), wobei die gültige Antwort den Cache-Server (210) veranlasst, den lokal gespeicherten Inhalt an den Sender (202) zu übertragen; und
wenn die Überprüfung ein ungültiges Ergebnis anzeigt, eine ungültige Antwort von dem Empfänger (204) und neuen Inhalt, der von der Benutzeranfragenachricht angefragt wurde, zu empfangen und die ungültige Antwort und den neuen Inhalt an den Cache-Server (210) zu übertragen, wobei der neue Inhalt den Cache-Server (210) veranlasst, den neuen Inhalt zu speichern und den neuen Inhalt an den Sender (202) zu übertragen.

7. System nach Anspruch 6, bei dem die IP-Adresse des Benutzers und die IP-Adresse der Quellstation in einem HTTP-Header-Feld (Hypertext Transfer Protocol) des zweiten Datenpakets übertragen werden.

8. System nach Anspruch 6, wobei der Lastenausgleichsserver ferner (208) konfiguriert ist zum:
Empfangen einer Vielzahl von Benutzeranfragenachrichten von dem Sender (202), Extrahieren von Schlüsselwörtern aus der Vielzahl von Benutzeranfragenachrichten und Zuordnen der Schlüsselwörter zu Antworten einer Vielzahl von Benutzeranfragenachrichten, wobei Benutzeranfragenachrichten mit derselben Antwort in der Vielzahl von Benutzeranfragenachrichten demselben Inhalt in dem Cache-Server (210) entsprechen; und Übertragen der Benutzeranfragenachrichten an den Cache-Server (210).

9. Computerlesbares Speichermedium, das ein Computerprogramm speichert, wobei das Computerprogramm Programmbefehle umfasst, wobei, wenn die Programmbefehle von einem Lastenausgleichsserver ausgeführt werden, der Lastenausgleichsserver veranlasst wird, das Verfahren gemäß einem der Ansprüche 1-5 durchzuführen.

## Revendications

1. Procédé de traitement d'un service de grappe de cache, comprenant:
la réception (S102), par un serveur d'équilibrage de charge, d'un premier paquet de données transmis par un routeur depuis un émetteur, dans lequel une adresse source du premier paquet de données est une adresse IP d'utilisateur de l'émetteur, et une adresse de destination du premier paquet de données est une adresse IP de station source d'un récepteur;
la transmission (S104), par le serveur d'équilibrage de charge, d'un deuxième paquet de données correspondant au premier paquet de données à un serveur cache, dans lequel le deuxième paquet de données porte l'adresse IP de l'utilisateur et l'adresse IP de la station source, une adresse source du deuxième paquet de données est une adresse IP du serveur d'équilibrage de charge, et une adresse de destination du deuxième paquet de données est une adresse IP du serveur cache;
la réception (S106), par le serveur d'équilibrage de charge, d'un troisième paquet de données correspondant au deuxième paquet de données et transmis par le serveur cache, dans lequel le troisième paquet de données transporte l'adresse IP de l'utilisateur et l'adresse IP de la station source, une adresse source du troisième paquet de données est l'adresse IP du serveur cache, et une adresse de destination du troisième paquet de données est l'adresse IP du serveur d'équilibrage de charge; et
transmettre (S108), par le serveur d'équilibrage de charge, un quatrième paquet de données correspondant au troisième paquet de données au routeur, dans lequel une adresse source du quatrième paquet de données est l'adresse IP de l'utilisateur de l'expéditeur, et une adresse de destination du quatrième paquet de données est l'adresse IP de la station source du récepteur,
dans lequel la réception (S106), par le serveur d'équilibrage de charge, d'un troisième paquet de données correspondant au deuxième paquet de données et transmis par le serveur cache est **caractérisée par**:
la réception, par le serveur d'équilibrage de charge, d'un message de demande de vérification initié par le serveur cache, et la transmission, par le serveur d'équilibrage de charge, du message de demande de vérification au récepteur via le routeur,
dans lequel le message de demande de vérification est utilisé pour effectuer une vérification auprès du destinataire afin de savoir si le contenu sauvegardé localement du serveur cache demandé par un message de demande de l'utilisateur est valide;
la réception par le serveur d'équilibrage de charge, lorsque la vérification indique un résultat valable, d'une réponse valable du récepteur, et la transmission de la réponse valable au serveur de cache, la réponse valable déclenchant la transmission par le serveur de cache du contenu sauvegardé localement à l'expéditeur;
la réception par le serveur d'équilibrage de charge, lorsque la vérification indique un résultat non valide, une réponse non valide du récepteur et un nouveau contenu demandé par le message de demande de l'utilisateur, et la transmission de la réponse non valide et du nouveau contenu au serveur de cache, le nouveau contenu déclenchant la sauvegarde du nouveau contenu par le serveur de cache et la transmission du nouveau contenu à l'expéditeur.

2. Procédé selon la revendication 1, dans lequel l'adresse IP de l'utilisateur et l'adresse IP de la station source sont transportées dans un champ d'en-tête HTTP (Protocole de Transfert Hypertexte) du deuxième paquet de données.

3. Procédé selon la revendication 1, dans laquelle
la réception (S102), par un serveur d'équilibrage de charge, d'un premier paquet de données transmis par un routeur à partir d'un expéditeur comprend:
la réception, par le serveur d'équilibrage de charge, d'une pluralité de messages de demande d'utilisateur provenant de l'expéditeur, l'extraction de mots clés de la pluralité de messages de demande d'utilisateur, et l'association des mots clés aux réponses de la pluralité de messages de demande d'utilisateur, dans laquelle les messages de demande d'utilisateur ayant la même réponse dans la pluralité de messages de demande d'utilisateur correspondent au même contenu dans le serveur cache; et
la transmission (S104), par le serveur d'équilibrage de charge, d'un deuxième paquet de données correspondant au premier paquet de données vers un serveur cache comprend:
la transmission, par le serveur d'équilibrage de charge, des messages de demande de l'utilisateur au serveur cache.

4. Procédé selon la revendication 3, dans laquelle l'extraction de mots clés à partir de la pluralité de messages de demande de l'utilisateur comprend:
l'extraction d'une chaîne de caractéristiques de l'URL (localisateur de ressources uniformes) dans les messages de demande de l'utilisateur en tant que mots clés.

5. Procédé selon la revendication 1, dans laquelle la transmission des messages de demande de l'utilisateur au serveur cache comprend:
la sélection du serveur cache sur la base d'un algorithme de hachage cohérent, et la transmission des messages de demande de l'utilisateur au serveur cache.

6. Système pour traiter un service de grappe de cache, comprenant: un émetteur (202), un récepteur (204), un routeur (206), un serveur d'équilibrage de charge (208) et un serveur de cache (210); dans lequel le serveur d'équilibrage de charge (208) est configuré pour:
recevoir un premier paquet de données transmis par le routeur (206) depuis l'émetteur (202), dans lequel une adresse source du premier paquet de données est une adresse IP d'utilisateur de l'émetteur (202), et une adresse de destination du premier paquet de données est une adresse IP de station source du récepteur (204);
transmettre un deuxième paquet de données correspondant au premier paquet de données au serveur cache (210), dans lequel le deuxième paquet de données transporte l'adresse IP de l'utilisateur et l'adresse IP de la station source, une adresse source du deuxième paquet de données est une adresse IP du serveur d'équilibrage de charge (208), et une adresse de destination du deuxième paquet de données est une adresse IP du serveur cache (210);
recevoir un troisième paquet de données correspondant au deuxième paquet de données et transmis par le serveur cache (210), dans lequel le troisième paquet de données transporte l'adresse IP de l'utilisateur et l'adresse IP de la station source, une adresse source du troisième paquet de données est l'adresse IP du serveur cache (210), et une adresse de destination du troisième paquet de données est l'adresse IP du serveur d'équilibrage de charge (208); et
transmettre un quatrième paquet de données correspondant au troisième paquet de données au routeur (206), dans lequel une adresse source du quatrième paquet de données est l'adresse IP de l'utilisateur de l'émetteur (202), et une adresse de destination du quatrième paquet de données est l'adresse IP de la station source du récepteur (204),
dans lequel le serveur d'équilibrage de charge (208) est **caractérisé par** le fait d'être configuré pour:
recevoir un message de demande de vérification initié par le serveur cache (210), et transmettre le message de demande de vérification au récepteur via le routeur, dans lequel le message de demande de vérification est utilisé pour effectuer une vérification avec le récepteur (204) pour savoir si le contenu sauvegardé localement du serveur cache (210) demandé par un message de demande d'utilisateur est valide;
recevoir, lorsque la vérification indique un résultat valide, une réponse valide du récepteur (204), et transmettre la réponse valide au serveur cache (210), la réponse valide déclenchant la transmission par le serveur cache (210) du contenu sauvegardé localement à l'expéditeur (202); et
recevoir, lorsque la vérification indique un résultat non valide, une réponse non valide du récepteur (204) et le nouveau contenu demandé par le message de demande de l'utilisateur, et transmettre la réponse non valide et le nouveau contenu au serveur cache (210), le nouveau contenu déclenchant la sauvegarde du nouveau contenu par le serveur cache (210) et la transmission du nouveau contenu à l'expéditeur (202).

7. Système selon la revendication 6, dans lequel l'adresse IP de l'utilisateur et l'adresse IP de la station source sont transportées dans un champ d'en-tête HTTP (Protocole de Transfert Hypertexte) du deuxième paquet de données.

8. Système selon la revendication 6, dans lequel le serveur d'équilibrage de charge (208) est en outre configuré pour:
recevoir une pluralité de messages de demande d'utilisateur de l'expéditeur (202), extraire des mots clés de la pluralité de messages de demande d'utilisateur, et associer les mots clés aux réponses de la pluralité de messages de demande d'utilisateur, dans lequel les messages de demande d'utilisateur avec la même réponse dans la pluralité de messages de demande d'utilisateur correspondent au même contenu dans le serveur cache (210) ; et transmettre les messages de demande d'utilisateur au serveur cache (210).

9. Médium de stockage lisible par ordinateur, stockant un programme informatique, le programme informatique comprenant des instructions de programme, dans lequel lorsque les instructions de programme sont exécutées par un serveur d'équilibrage de charge, le serveur d'équilibrage de charge est amené à exécuter la méthode selon l'une quelconque des revendications 1 à 5.
